# EUROPÄISCHE PATENTANMELDUNG

(11) **EP 4 707 150 A1**
(43) Veröffentlichungstag der Anmeldung: **11.03.2026**
(21) Anmeldenummer: 25192548.3
(22) Anmeldetag: 29.07.2025
(51) Int. Cl.: B62M 9/16

(54) **RIEMENSPANNER FÜR EIN FAHRRAD SOWIE FAHRRAD MIT EINEM RIEMENSPANNER**

(30) Priorität: 02.08.2024 DE 202024104381 U
(71) Anmelder: Kalkhoff Werke GmbH, 49685 Emstek (DE)
(72) Erfinder: JANKNECHT, Gerrit, 49661 Cloppenburg (DE)
(74) Vertreter: Jabbusch, Matthias

(57) **Zusammenfassung**

Bei einem Riemenspanner für ein Fahrrad, wobei das Fahrrad einen Fahrradrahmen und einen Riemenantrieb mit einem Antriebsriemen aufweist und wobei der Riemenspanner mindestens eine Führungsrolle aufweist, ist vorgesehen, dass der Riemenspanner einen Montagekörper zur Montage des Riemenspanners an den Fahrradrahmen aufweist,
dass der Riemenspanner einen Schwenkkörper aufweist, wobei der Schwenkkörper um eine Drehachse schwenkbar gelagert an dem Montagekörper angeordnet ist,
dass die Führungsrolle drehbar gelagert an dem Schwenkkörper angeordnet ist,
dass der Riemenspanner mindestens eine Arretieranordnung zum Arretieren der Position zwischen dem Montagekörper und dem Schwenkkörper aufweist,
dass die mindestens eine Arretieranordnung durch ein in dem Montagekörper und/oder dem Schwenkkörper angeordnetes Langloch und ein in dem Langloch geführtes Fixierungsmittel ausgebildet ist.

## Beschreibung

Die Erfindung betrifft einen Riemenspanner für ein Fahrrad, wobei das Fahrrad einen Fahrradrahmen und einen Riemenantrieb mit einem Antriebsriemen aufweist und wobei der Riemenspanner mindestens eine Führungsrolle aufweist. Zudem betrifft die Erfindung ein Fahrrad mit einem erfindungsgemäßen Riemenspanner.

Neben Fahrrädern mit einem herkömmlichen Kettenantrieb sind am Markt auch Fahrräder mit einem Riemenantrieb verfügbar, wobei der Riemenantrieb einige Vorteile gegenüber einem Kettenantrieb liefert. Insbesondere ist der Riemenantrieb wartungsärmer als ein Kettenantrieb. Um eine effiziente Kraftübertragung der Kurbel auf das angetriebene Hinterrad zu gewährleisten, ist es notwendig, den Antriebsriemen zu spannen. Bei entsprechender Ausbildung des Fahrradrahmens besteht die Möglichkeit den Riemen über die Position des Hinterrades zu spannen. Bei Fahrrädern mit senkrechten Ausfallenden oder auch bei Fahrrädern mit Steckachsen besteht die Möglichkeit nicht, da das Hinterrad nicht versetzt werden kann. Bei solchen Fahrrädern können Riemenspanner zum Einsatz kommen.

Beispielsweise ist aus der EP 3 995 388 A1 ein Fahrrad mit einem Antriebsstrang, der einen Riemen umfasst, bekannt. Ferner umfasst das Fahrrad einen Riemenschutz, wobei der Riemen innerhalb des Riemenschutzes geführt wird. Zudem umfasst das Fahrrad ferner einen Spanner zum Aufrechterhalten der Spannung des Riemens, wobei der Spanner innerhalb und an einer Innenwand des Riemenschutzes montiert ist, wobei der Spanner zwei Arme aufweist und wobei der Spanner ferner drei Führungsräder für den Riemen aufweist.

Der Erfindung liegt die Aufgabe zugrunde einen Riemenspanner vorzuschlagen, mit dem eine einfache und robuste Spannung des Riemens ermöglicht ist.

Die Lösung dieser Aufgabe erfolgt mit einem Riemenspanner mit den Merkmalen des Schutzanspruchs 1 sowie mit einem Fahrrad mit den Merkmalen des Schutzanspruchs 8. Weiterbildungen und vorteilhafte Ausgestaltungen sind in den Unteransprüchen angegeben.

Bei einem Riemenspanner für ein Fahrrad, wobei das Fahrrad einen Fahrradrahmen und einen Riemenantrieb mit einem Antriebsriemen aufweist und wobei der Riemenspanner mindestens eine Führungsrolle aufweist, ist erfindungsgemäß vorgesehen, dass der Riemenspanner einen Montagekörper zur Montage des Riemenspanners an den Fahrradrahmen aufweist, dass der Riemenspanner einen Schwenkkörper aufweist, wobei der Schwenkkörper um eine Drehachse schwenkbar gelagert an dem Montagekörper angeordnet ist, dass die Führungsrolle drehbar gelagert an dem Schwenkkörper angeordnet ist, dass der Riemenspanner mindestens eine Arretieranordnung zum Arretieren der Position zwischen dem Montagekörper und dem Schwenkkörper aufweist, dass die mindestens eine Arretieranordnung durch ein in dem Montagekörper und/oder dem Schwenkkörper angeordnetes Langloch und ein in dem Langloch geführtes Fixierungsmittel ausgebildet ist.

Der Riemenspanner ist zur Montage an einem Fahrradrahmen vorgesehen. Hierzu weist der Riemenspanner einen Montagekörper auf, der an dem Fahrradrahmen montiert werden kann. An dem Montagekörper ist schwenkbar gelagert ein Schwenkkörper angeordnet. Insbesondere ist der Schwenkkörper um eine Drehachse herum schwenkbar mit dem Montagekörper verbunden.

Die Drehachse kann beispielsweise durch ein Verbindungsmittel, insbesondere eine Schraube ausgebildet sein, die mit dem Schwenkkörper verbunden ist und durch eine Öffnung des Montagekörpers geführt ist. An dem Schwenkkörper ist drehbar gelagert eine Führungsrolle angeordnet, die zum Spannen des Antriebriemens in Anlage zu dem Antriebsriemen gebracht werden kann. Insbesondere kann die Führungsrolle in Anlage zu der Außenseite des Antriebsriemens gebracht werden, um eine Spannung auf den Antriebsriemen zu erreichen. Durch das Schwenken des Schwenkkörpers um die Drehachse herum kann die Spannung des Antriebsriemens im montierten Zustand des Riemenspanners eingestellt werden. Insbesondere kann der Abstand zwischen der Führungsrolle und der Kettenstrebe verringert werden und somit ein Druck auf den Antriebsriemen ausgeübt werden. Zum Fixieren des Schwenkkörpers in der gewünschten Stellung, also bei der gewünschten Riemenspannung, weist der Riemenspanner mindestens ein, vorzugsweise zwei Arretieranordnungen, auf. Um eine ausreichende Stabilität zu gewährleisten ist mindestens eine Arretieranordnung durch ein Langloch und ein in dem Langloch geführtes Fixierungsmittel ausgebildet. Vorzugsweise ist das Langloch in dem Montagekörper angeordnet. Bei dem Fixierungsmittel kann es sich um eine Schraube handeln. Insbesondere ist die Schraube durch das Langloch des Montagekörpers geführt und fasst in ein Gewinde in dem Schwenkkörper, wobei der Schraubenkopf über die Ränder des Langloches hinweg ragt. Durch ein Anziehen der Schraube kann eine kraftschlüssige Verbindung zwischen dem Schwenkkörper und dem Montagekörper hergestellt werden, sodass der Schwenkkörper in der gewünschten Position gesichert ist. Eine weitere Arretieranordnung kann durch das die Drehachse ausbildende Verbindungsmittel und die entsprechenden Öffnung, durch die das Verbindungsmittel hindurchgeführt ist, ausgebildet sein. Insbesondere kann es sich bei dem Verbindungsmittel ebenfalls um eine Schraubverbindung handeln, die in der gewünschten Position des Schwenkkörpers fest gezogen werden kann. Durch den einfachen Aufbau und durch die Ausbildung der mindestens einen Arretieranordnung ist auf einfache Art und Weise ein Riemenspanner ausgebildet.

In einer Weiterbildung der Erfindung ist das Langloch in dem Montagekörper ausgebildet und das Fixierungsmittel ist mit dem Schwenkkörper verbunden. Durch die Anordnung des Langloches in dem Montagekörper, sowie durch das mit dem Schwenkkörper verbundene Fixierungsmittel, insbesondere durch eine in ein Gewinde des Schwenkkörpers fassende Schraube, ist im an den Fahrradrahmen montierten Zustand eine einfache Einstellung der richtigen Position des Schwenkkörpers zum Montagekörper gewährleistet. Die fest zu ziehenden Schrauben können leicht im montierten Zustand des Riemenspanner mittels Montagewerkzeug erreicht werden.

In einer bevorzugten Ausführungsform der Erfindung ist das Langloch bogenförmig ausgebildet und die Bogenform ist konzentrisch zu einer Kreisbahn um die Drehachse angeordnet. Das Langloch weist eine Bogenform auf, insbesondere bildet das Langloch einen Kreisbahnabschnitt um die Drehachse herum aus. Hierdurch ist ein geführtes Schwenken des Schwenkkörpers um die Drehachse ermöglicht. Das Fixierungsmittel ist, insbesondere in Form einer Schraube, in dem bogenförmigen Langloch geführt und kann jeder gewünschten Position arretiert werden.

In einer bevorzugten Ausführungsform der Erfindung weisen der Montagekörper und der Schwenkkörper jeweils einen flächig ausgebildeten Bereich auf, die flächig ausgebildeten Bereiche sind parallel zueinander angeordnet, die Drehachse ist senkrecht zu den flächig ausgebildeten Bereichen angeordnet und das Langloch ist in dem flächig ausgebildeten Bereich des Montagekörpers angeordnet. Der Montagekörper und der Schwenkkörper weisen jeweils einen flächig ausgebildeten Bereich auf, wobei die flächigen Bereiche parallel zueinander ausgerichtet und in Anlage zueinander gebracht sind. Die Drehachse, um die der Schwenkkörper gegen den Montagekörper schwenkbar gelagert ist, steht senkrecht auf den von den flächigen Bereichen aufgespannten imaginären Ebenen. Die Drehachse kann durch eine Schraube, die in ein Gewinde des Schwenkkörpers fasst, ausgebildet sein. Weiterhin ist das Langloch in dem flächig ausgebildeten Bereich des Montagekörpers angeordnet. In dem Langloch kann eine Schraube als Fixierungsmittel geführt sein. Durch das Anziehen dieses Fixierungsmittels sowie durch das Anziehen der die Drehachse ausbildenden Schraubverbindung kann eine kraftschlüssige Verbindung zwischen den beiden flächigen Bereichen hergestellt werden, so dass die Position des Schwenkkörpers zum Montagekörper fixiert ist.

In einer Ausführungsform der Erfindung ist durch die mindestens eine Arretieranordnung eine kraftschlüssige Verbindung zwischen den flächig ausgebildeten Bereichen herstellbar. Durch mindestens eine Arretieranordnung, vorzugsweise durch zwei Arretieranordnungen wird eine kraftschlüssige Verbindung zwischen den flächig ausgebildeten Bereichen des Montagekörpers sowie des Schwenkkörpers hergestellt. Bei den Arretieranordnungen kann es sich um Schraubverbindungen handeln, die zur Herstellung der kraftschlüssigen Verbindung festgezogen werden.

In einer Ausführungsform der Erfindung weist der Montagekörper einen Montagebereich zur Montage an dem Fahrrad auf und eine von dem Montagebereich aufgespannte Ebene spannt einen Winkel, insbesondere einen rechten Winkel, mit dem flächig ausbildeten Bereich des Montagekörpers auf. Zur Montage des Riemenspanners an einem Fahrradrahmen weist der Montagekörper einen Montagebereich auf. Beispielsweise kann der Montagebereich Montageöffnungen aufweisen, durch die Schrauben zur Befestigung des Riemenspanners an dem Fahrradrahmen geführt werden können. Insbesondere kann der Montagebereich senkrecht zu dem flächig ausgebildeten Bereich des Montagekörpers angeordnet sein. Beispielsweise kann der flächig ausgebildete Bereich des Montagekörpers im an einen Fahrradrahmen montierten Zustand im Wesentlichen parallel zu der von dem Antriebsriemen aufgespannten Ebene angeordnet sein.

In einer bevorzugten Ausführungsform der Erfindung ist mindestens ein Fixierungsmittel durch eine Schraubverbindung ausgebildet. Vorzugsweise sind die Fixierungsmittel beider Arretieranordnungen, also der Arretieranordnung der Drehachse sowie der durch das Langloch ausgebildeten Arretieranordnung durch Schraubverbindungen ausgebildet. Insbesondere können hier Innensechskantschrauben zur Verwendung kommen, sodass eine Einstellung der Riemenspannung mit gebräuchlichem Fahrradmontagewerkzeug erfolgen kann.

Ein weiterer Aspekt der Erfindung betrifft ein Fahrrad mit einem Fahrradrahmen, wobei das Fahrrad einen Riemenantrieb mit einem Antriebsriemen aufweist und wobei das Fahrrad einen erfindungsgemäßen Riemenspanner aufweist. Der erfindungsgemäße Riemenspanner ist zur Montage an einem Fahrradrahmen vorgesehen. Insbesondere kann der Fahrradrahmen für die Montage des Montageteils im Bereich der Kettenstreben, insbesondere zwischen dem Tretlagergehäuse und der Gabelung der beiden Kettenstreben, Montagepunkte, insbesondere Gewinde, aufweisen. Der flächig ausgebildete Bereich des Montagekörpers ist hier vorzugsweise im Wesentlichen parallel zu den von dem Antriebsrahmen und dem angetriebenen Hinterrad aufgespannten imaginären Ebenen angeordnet. Somit ist die Schwenkebene des Schwenkkörpers ebenfalls parallel zu diesen imaginären Ebenen angeordnet. Die Führungsrolle kann vorzugsweise von unten an die Außenseite des Antriebsriemens angenähert werden und einen Druck auf diesen ausüben, so dass der Antriebsriemen gespannt wird. Durch das Schwenken des Schwenkkörpers um die Drehachse herum kann die Spannung des Antriebsriemens im montierten Zustand des Riemenspanners eingestellt werden. Insbesondere kann der Abstand zwischen der Führungsrolle und der Kettenstrebe verringert werden und somit ein Druck auf den Antriebsriemen ausgeübt werden. Bei Erreichen der gewünschten Spannung kann der Schwenkkörper in der Stellung mittels der Arretieranordnungen fixiert werden. Auch ein Nachstellen der Spannung des Antriebriemens ist problemlos durch ein Schwenken und erneutes Fixieren des Schwenkkörpers möglich.

In einer Ausführungsform der Erfindung ist der Riemenspanner im Bereich der Kettenstreben des Fahrradrahmens angeordnet. Insbesondere kann der Montagekörper im Bereich der Kettenstreben, insbesondere zwischen dem Tretlagergehäuse und der Gabelung der beiden Kettenstreben, also im Bereich der Hinterradgabel, an dem Fahrradrahmen montiert werden. Vorzugsweise wird der Riemenspanner an der, der Fahrbahn zugewandten Unterseite des Fahrradrahmens montiert sein, so dass sich die Führungsrolle unterhalb der Kettenstrebe befindet. An dieser Montageposition ist der Riemenspanner leicht zum Einstellen der Riemenspannung mittels Werkzeug erreichbar. Gleichzeitig wird der äußere Gesamteindruck des Fahrrades nicht nennenswert durch den Riemenspanner beeinflusst.

In einer Weiterbildung der Erfindung ist die Führungsrolle des Riemenspanners zum Spannen des Riemens von unten an die keine Zähne aufweisende Außenseite des Antriebsriemens in Anlage gebracht. Die Führungsrolle wird von unten an die Außenseite des Antriebsriemens angenähert um einen Druck auf diesen ausüben, so dass der Antriebsriemen gespannt wird. Bei Erreichen der gewünschten Spannung kann der Schwenkkörper in der Stellung mittels der Arretieranordnungen fixiert werden.

Im Folgenden wird die Erfindung anhand eines in der Zeichnung dargestellten Ausführungsbeispiels weiter erläutert. In den schematischen Darstellungen ist dargestellt in:
Fig. 1: ein erfindungsgemäßer Riemenspanner in einer perspektivischen Darstellung;
Fig. 2: ein Riemenspanner nach Fig. 1 an einem Fahrradrahmen montiert; und
Fig. 3: ein Riemenspanner gemäß Fig. 2 in einer Detailansicht.

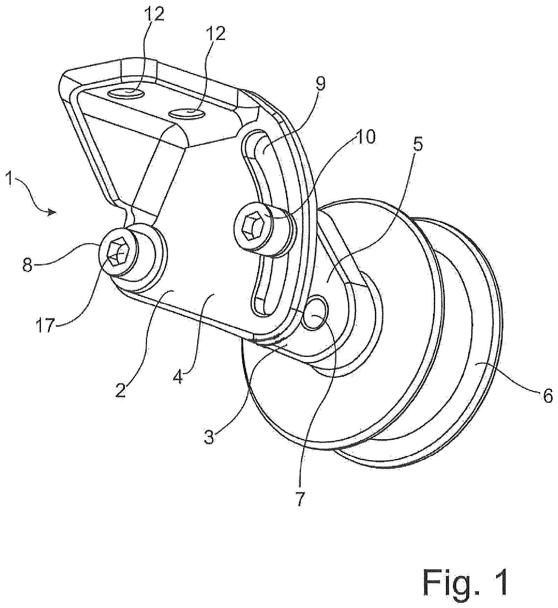

In Fig. 1 ist ein Riemenspanner 1 mit einem Montagekörper 2 und einem Schwenkkörper 3 dargestellt. Der Montagekörper 2 weist einen flächig ausgebildeten Bereich 4, der Schwenkkörper 3 weist einen flächig ausgebildeten Bereich 5 auf. An dem Schwenkkörper 3 ist eine Führungsrolle 6 drehbar gelagert angeordnet. Die Führungsrolle 6 kann mittels einer Schraubverbindung 7 senkrecht zu dem flächig ausgebildeten Bereich 5 an dem Schwenkkörper 3 angeordnet sein. Der Schwenkkörper 3 ist mittels einer Schraubverbindung 8 schwenkbar gelagert an dem Montagekörpers 2 angeordnet. Die Schraubverbindung 8 bildet die Drehachse 17 zwischen dem Montagekörpers 2 und dem Montagekörper 3. Gleichzeitig bildet die Schraubverbindung 8 eine Arretieranordnung zwischen dem Schwenkkörper 3 und dem Montagekörper 2 dadurch aus, dass die Schraubverbindung 8 angezogen werden kann. In dem flächigen Bereich des Montagekörpers 2 ist ein bogenförmiges Langloch 9 angeordnet. Durch das Langloch 9 ist eine Schraube 10 geführt, die in ein Gewinde des Schwenkkörpers 3 fast. Durch Anziehen der Schraube 10 ist eine weitere Arretieranordnung zwischen dem Montagekörpers 2 und dem Schwenkkörper 3 durch die Herstellung einer kraftschlüssigen Verbindung gegeben. Der Montagekörpers 2 weist einen Montagebereich 11 mit Montageöffnungen 12 zur Montage an einem Fahrradrahmen auf. Die von dem Montagebereich 11 aufgespannte imaginäre Ebene ist im Wesentlichen senkrecht zu dem flächig ausgebildeten Bereich 4 angeordnet.

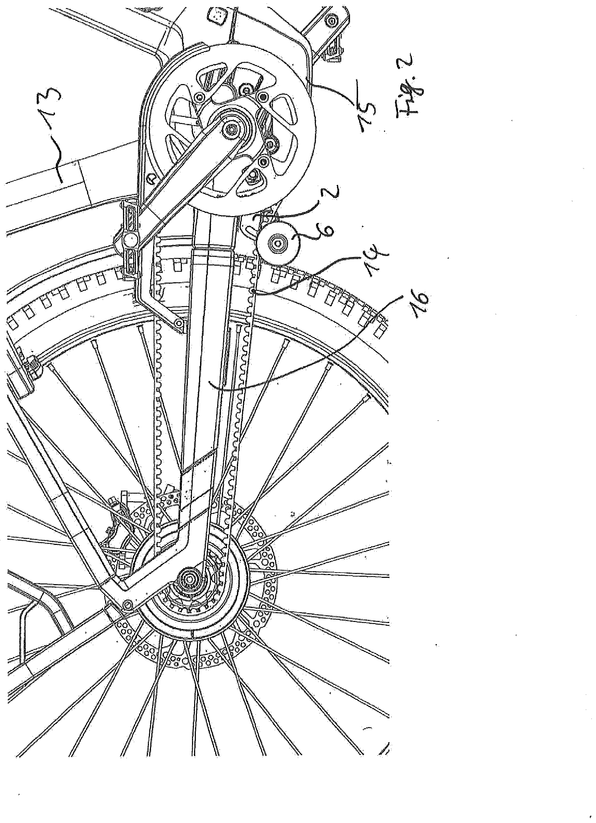

In Fig. 2 ist der Riemenspanner 1 an einem Fahrradrahmen 13 montiert. Die Führungsrolle 6 ist in Anlage an eine Außenseite des Antriebsriemens 14 gebracht. Durch ein nach oben schwenken des Schwenkkörpers 3 mit der Führungsrolle 6 wird der Antriebsriemen 14 gespannt. Durch das Schwenken des Schwenkkörpers 3 um die Drehachse 17 herum kann die Spannung des Antriebsriemens 14 im montierten Zustand des Riemenspanners 1 eingestellt werden. Insbesondere kann der Abstand zwischen der Führungsrolle 6 und der Kettenstrebe16 verringert werden und somit ein Druck auf den Antriebsriemen 14 ausgeübt werden.

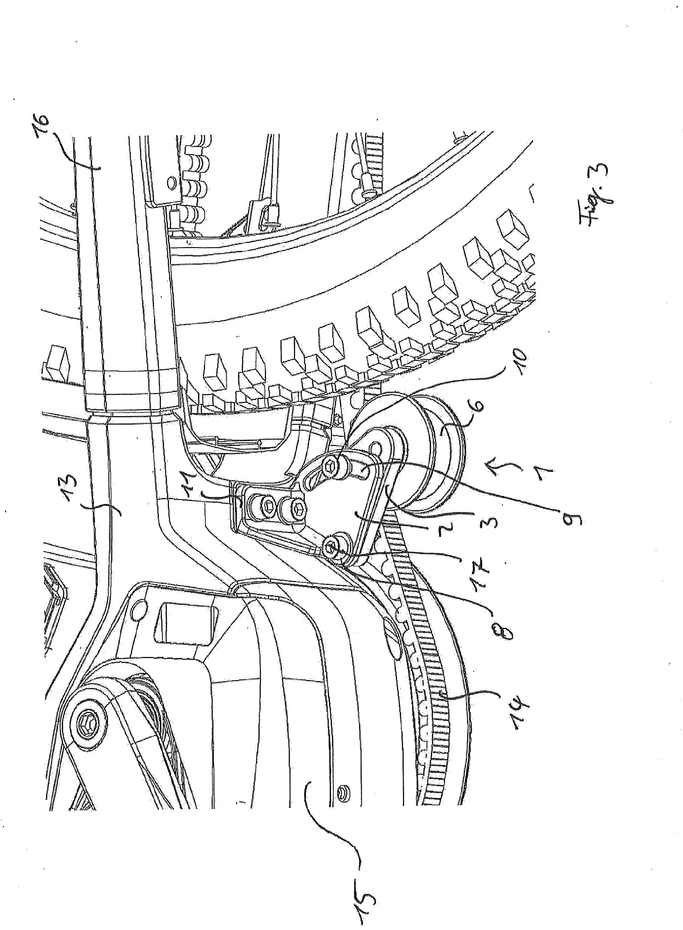

In Figur 3 ist der Riemenspanner in seiner Montageposition an dem Fahrradrahmen 13 dargestellt. Der Riemenspanner 1 ist zwischen dem Tretlagergehäuse 15 und der Gabelung der Kettenstreben 16 angeordnet.

## Patentansprüche

1. Riemenspanner (1) für ein Fahrrad, wobei das Fahrrad einen Fahrradrahmen (13) und einen Riemenantrieb mit einem Antriebsriemen (14) aufweist und wobei der Riemenspanner (1) mindestens eine Führungsrolle (6) aufweist,
**dadurch gekennzeichnet,**
**dass** der Riemenspanner (1) einen Montagekörper (2) zur Montage des Riemenspanners (1) an den Fahrradrahmen (13) aufweist,
**dass** der Riemenspanner (1) einen Schwenkkörper (3) aufweist, wobei der Schwenkkörper (3) um eine Drehachse (17) schwenkbar gelagert an dem Montagekörper (2) angeordnet ist,
**dass** die Führungsrolle (6) drehbar gelagert an dem Schwenkkörper (3) angeordnet ist,
**dass** der Riemenspanner (1) mindestens eine Arretieranordnung zum Arretieren der Position zwischen dem Montagekörper (2) und dem Schwenkkörper (3) aufweist,
**dass** die mindestens eine Arretieranordnung durch ein in dem Montagekörper (2) und/oder dem Schwenkkörper (3) angeordnetes Langloch (9) und ein in dem Langloch (9) geführtes Fixierungsmittel ausgebildet ist.

2. Riemenspanner nach Anspruch 1, **dadurch gekennzeichnet, dass** das Langloch (9) in dem Montagekörper (2) ausgebildet ist und dass das Fixierungsmittel mit dem Schwenkkörper (3) verbunden ist.

3. Riemenspanner nach einem der Ansprüche 1 oder 2, **dadurch gekennzeichnet, dass** das Langloch (9) bogenförmig ausgebildet ist und dass die Bogenform konzentrisch zu einer Kreisbahn um die Drehachse (17) angeordnet ist.

4. Riemenspanner nach einem der Ansprüche 1 bis 3, **dadurch gekennzeichnet, dass** der Montagekörper (2) und der Schwenkkörper (3) jeweils einen flächig ausgebildeten Bereich (4, 5) aufweisen, dass die flächig ausgebildeten Bereiche (4, 5) parallel zueinander angeordnet sind, dass die Drehachse (17) senkrecht zu den flächig ausgebildeten Bereichen (4, 5) angeordnet ist und dass das Langloch (9) in dem flächig ausgebildeten Bereich (4) des Montagekörpers (2) angeordnet ist.

5. Riemenspanner nach Anspruch 4, **dadurch gekennzeichnet, dass** durch die mindestens eine Arretieranordnung eine kraftschlüssige Verbindung zwischen den flächig ausgebildeten Bereichen (4, 5) herstellbar ist.

6. Riemenspanner nach einem der Ansprüche 4 bis 5, **dadurch gekennzeichnet, dass** der Montagekörper (2) einen Montagebereich (11) zur Montage an dem Fahrrad aufweist und dass eine von dem Montagebereich (11) aufgespannte Ebene einen Winkel, insbesondere einen rechten Winkel, mit dem flächig ausbildeten Bereich (4) des Montagekörpers (2) aufspannt.

7. Riemenspanner nach einem der Ansprüche 1 bis 6, **dadurch gekennzeichnet, dass** das mindestens eine Fixierungsmittel durch eine Schraubverbindung (8) ausgebildet ist.

8. Fahrrad mit einem Fahrradrahmen (13), wobei das Fahrrad einen Riemenantrieb mit einem Antriebsriemen (14) aufweist und wobei das Fahrrad einen Riemenspanner (1) nach einem der vorhergehenden Ansprüche aufweist.

9. Fahrrad nach Anspruch 8, **dadurch gekennzeichnet, dass** der Riemenspanner (1) im Bereich der Kettenstreben (16) des Fahrradrahmens (13) angeordnet ist.

10. Fahrrad nach einem der Ansprüche 8 oder 9, **dadurch gekennzeichnet, dass** die Führungsrolle (6) des Riemenspanners (1) zum Spannen des Riemens von unten an die keine Zähne aufweisende Außenseite des Antriebsriemens (14) Kin Anlage gebracht ist.
